(19) Europäisches Patentamt
European Patent Office
Office européen des brevets

(11) **EP 4 696 735 A1**

(12) **EUROPEAN PATENT APPLICATION**
published in accordance with Art. 153(4) EPC

(43) Date of publication:
**18.02.2026 Bulletin 2026/08**

(21) Application number: **24788918.1**

(22) Date of filing: **20.03.2024**

(51) International Patent Classification (IPC):
*C08G 63/82* (2006.01)    *C08G 63/86* (2006.01)
*C08G 63/83* (2006.01)    *C08G 63/68* (2006.01)
*C08G 63/692* (2006.01)   *C08G 63/16* (2006.01)
*C08K 5/521* (2006.01)

(52) Cooperative Patent Classification (CPC):
**C08G 63/16; C08G 63/68; C08G 63/692;
C08G 63/82; C08G 63/83; C08G 63/86;
C08K 5/521**

(86) International application number:
**PCT/KR2024/003454**

(87) International publication number:
**WO 2024/214975 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2023 KR 20230047057**

(71) Applicant: SK Chemicals Co., Ltd.
**Seongnam-si, Gyeonggi-do 13494 (KR)**

(72) Inventors:
• HWANG, Da-Young
**Seongnam-si, Gyeonggi-do 13494 (KR)**
• KIM, Ha-Neul
**Seongnam-si, Gyeonggi-do 13494 (KR)**
• MOON, Jung-Me
**Seongnam-si, Gyeonggi-do 13494 (KR)**
• OH, Hyun-Woo
**Seongnam-si, Gyeonggi-do 13494 (KR)**
• LEE, Yoo Jin
**Seongnam-si, Gyeonggi-do 13494 (KR)**

(74) Representative: **Dehns
10 Old Bailey
London EC4M 7NG (GB)**

(54) **POLYESTER RESIN AND PREPARATION METHOD THEREFOR**

(57)    The present invention relates to a polyester resin and a preparation method therefor, the polyester resin comprising: a diol repeating unit derived from a diol component; and a dicarboxylic acid repeating unit derived from a dicarboxylic acid component, wherein the content ratio between germanium (Ge), zinc (Zn), and phosphorus (P) is controlled within a specific range. The polyester resin according to the present invention can have excellent basic physical properties and color characteristics.

EP 4 696 735 A1

## Description

### Technical Field

The present invention relates to a polyester resin having excellent color characteristics while exhibiting physical properties such as high thermal resistance, chemical resistance, and impact resistance, and to a process for preparing the polyester resin.

### Background Art

Polyester, among polymers, is used as a material in various fields by virtue of its excellent mechanical strength, along with thermal resistance, chemical resistance, and impact resistance. In particular, polyester films or plates prepared using a polyester resin have good transparency and excellent mechanical strength, so that they are widely used for cases, boxes, partitions, shelves, panels, packaging materials, building materials, interior and exterior materials, and the like.

Such a polyester resin may be prepared by a process in which an acid component and a diol component are subjected to direct esterification and/or transesterification in the presence of a polymerization catalyst, followed by polycondensation thereof. Terephthalic acid (TPA) has been typically used as the acid component, and ethylene glycol (EG) has been typically used as the diol component. However, polyester resins prepared using these components do not have sufficient thermal resistance and chemical resistance. In recent years, various aliphatic or aromatic cyclic diol components (e.g., isosorbide (ISB), cyclohexanedimethanol (CHDM), and the like) have been adopted in the production of polyester resins.

However, a polyester resin produced by adopting such a cyclic diol component has a high yellow index (YI), haze, and the like. Thus, there is a problem in that the appearance characteristics (e.g., transparency) of molded articles are poor when the molded articles are manufactured using the same. In addition, there is a limit to increasing the productivity of a polyester resin since the polymerization reaction efficiency between raw material components for preparing the polyester resin does not reach a satisfactory level.

Accordingly, there is a need to develop a technology that can increase the productivity of a polyester resin and provide molded articles with excellent appearance characteristics.

### Disclosure of Invention

#### Technical Problem

In order to solve the above-mentioned problems in the prior art, the present inventors have conducted various studies. As a result, it has been discovered that a polyester resin with excellent color characteristics can be prepared with high efficiency (enhanced productivity) by controlling the content ratios between specific elements contained in the polyester resin within a specific range.

Accordingly, an object of the present invention is to provide a polyester resin with excellent color characteristics, along with basic properties, and a process for preparing the same with high productivity.

#### Solution to Problem

In order to accomplish the above object, the present invention provides a polyester resin, which comprises a diol repeat unit derived from a diol component; and a dicarboxylic acid repeat unit derived from a dicarboxylic acid component, wherein the content ratios between germanium (Ge), zinc (Zn), and phosphorus (P) satisfy the following Relationships 1 and 2:

$$[\text{Relationship 1}]$$

$$1 \le \text{Ge/Zn} \le 30$$

$$[\text{Relationship 2}]$$

$$1 \le (\text{Ge} + \text{Zn})/\text{P} \le 15$$

In addition, the present invention provides a process for preparing a polyester resin, which comprises feeding a diol component and a dicarboxylic acid component to a reactor; feeding at least one of a germanium (Ge)-containing catalyst and a zinc (Zn)-containing catalyst and a phosphorus (P)-containing stabilizer to the reactor; subjecting the diol component and the dicarboxylic acid component to an esterification reaction in the presence of the catalyst and the stabilizer to prepare an oligomer; and subjecting the oligomer to a polycondensation reaction, wherein the content ratios between germanium (Ge), zinc (Zn), and phosphorus (P) satisfy the above Relationships 1 and 2.

**Advantageous Effects of Invention**

In the present invention, a catalyst and a stabilizer of specific components (e.g., germanium (Ge)-containing catalyst, zinc (Zn)-containing catalyst, and phosphorus (P)-containing stabilizer) are adopted in the reaction process of a polyester resin, while the content ratios between specific elements contained in the polyester resin are controlled. As a result, it is possible to provide a polyester resin that has high mechanical strength, along with thermal resistance, chemical resistance, and impact resistance, as well as excellent color characteristics (e.g., transparency).

In addition, in the present invention, a polyester resin is prepared such that the content ratios between specific elements contained in the polyester resin are controlled. As a result, it is possible to provide a polyester resin having a desired intrinsic viscosity (IV), along with maximized productivity of the polyester resin.

**Best Mode for Carrying out the Invention**

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

**Polyester resin**

The polyester resin according to the present invention comprises a diol repeat unit derived from a diol component; and a dicarboxylic acid repeat unit derived from a dicarboxylic acid component; and at least one element selected from the group consisting of germanium (Ge), zinc (Zn), and phosphorus (P), which will be described in detail as follows.

The diol repeat unit contained in the polyester resin according to the present invention is derived from the diol component. The diol component is not particularly limited. Specifically, it may comprise at least one selected from the group consisting of ethylene glycol, cyclohexanedimethanol, isosorbide, diethylene glycol, neopentyl glycol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, 4-(hydroxymethyl)cyclohexylmethyl-4-(hydroxymethyl)cyclohexanecarboxylate (CHDM derivative), 4-(4-(hydroxymethyl)cyclohexylmethoxymethyl)cyclohexylmethanol (CHDM derivative), bis(2-hydroxyethyl) terephthalate, and recycled bis(2-hydroxyethyl) terephthalate.

For example, the diol component may comprise a first diol component comprising ethylene glycol and a second diol component comprising at least one (specifically, 2 or more, 3 or more, or 4 or more) selected from the group consisting of cyclohexanedimethanol, isosorbide, diethylene glycol, bis(2-hydroxyethyl) terephthalate, recycled bis(2-hydroxyethyl) terephthalate, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol.

Here, the second diol compound may comprise at least two, or at least three, selected from the group consisting of cyclohexanedimethanol, isosorbide, diethylene glycol, bis(2-hydroxyethyl) terephthalate, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol, along with recycled bis(2-hydroxyethyl) terephthalate.

When the diol component comprises the first diol component and the second diol component, the diol repeat unit may comprise a first diol repeat unit (structural unit) derived from the first diol component and a second diol repeat unit (structural unit) derived from the second diol component. The content of the first diol repeat unit (content of the first diol repeat unit contained in the polyester resin) is not particularly limited, but it may be 5 to 95% by mole, 10 to 90% by mole, 10 to 85% by mole, 15 to 85% by mole, or 20 to 70% by mole, based on the total number of moles of the diol repeat unit. In addition, the content of the second diol repeat unit (content of the second diol repeat unit contained in the polyester resin) is not particularly limited, but it may be 5 to 95% by mole, 10 to 90% by mole, 10 to 85% by mole, 15 to 85% by mole, or 20 to 70% by mole, based on the total number of moles of the diol repeat unit. As the content of the first diol repeat unit and the content of the second diol repeat unit are each within the above range, a polyester resin having excellent thermal resistance, chemical resistance, color characteristics, and productivity can be provided.

In addition, when the second diol component comprises at least one comonomer selected from the group consisting of cyclohexanedimethanol, isosorbide, diethylene glycol, bis(2-hydroxyethyl) terephthalate, recycled bis(2-hydroxyethyl) terephthalate, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol, the diol repeat unit may comprise a repeat unit (structural unit) derived from the comonomer. For example, the content of a repeat unit derived from cyclohexanedimethanol (content of a repeat unit derived from cyclohexanedimethanol contained in the polyester resin) is not particularly limited, but it may be 1 to 10% by mole, 2 to 9% by mole, 3 to 8% by mole, or 3 to 7% by mole, based on the total number of moles of the diol repeat unit. The content of a repeat unit derived from isosorbide (content of a repeat unit derived from isosorbide contained in the polyester resin) is not particularly limited, but it may be 1 to 70% by mole, 2 to 65% by mole, 3 to 60% by mole, or 4 to 60% by mole, based on the total number of moles of the diol repeat unit. The content of a repeat unit derived from diethylene glycol (content of a repeat unit derived from diethylene glycol contained in the polyester resin) is not particularly limited, but it may be 1 to 10% by mole, 1 to 9% by mole, 1 to 8% by mole, or 1 to 7% by mole, based on the total number of moles of the diol repeat unit. The content of a repeat unit derived from recycled bis(2-hydroxyethyl) terephthalate (content of a repeat unit derived from recycled bis(2-hydroxyethyl) terephthalate contained in the polyester resin) is not particularly limited, but it may be 1 to 100% by mole, 2 to 100% by mole, 3 to 100% by mole, 4 to 100% by mole, 4 to 95% by mole, or 4 to 90% by mole, based on the total number of moles of the diol repeat unit.

The dicarboxylic acid repeat unit contained in the polyester resin according to the present invention is derived from the dicarboxylic acid component. The dicarboxylic acid component is not particularly limited. Specifically, it may comprise at least one selected from the group consisting of isophthalic acid, terephthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

For example, the dicarboxylic acid component may comprise at least one selected from the group consisting of isophthalic acid, terephthalic acid, dimethyl phthalate, and dimethyl isophthalate. Preferably, it may comprise isophthalic acid, terephthalic acid, or a combination thereof.

When the dicarboxylic acid component comprises isophthalic acid and/or terephthalic acid, the dicarboxylic acid repeat unit may comprise an isophthalic acid repeat unit (structural unit) derived from isophthalic acid, a terephthalic acid repeat unit (structural units) derived from terephthalic acid, or a combination thereof. The content of the isophthalic acid repeat unit (content of the isophthalic acid repeat unit contained in the polyester resin) is not particularly limited, but it may be 1 to 10% by mole, 2 to 10% by mole, 3 to 10% by mole, or 4 to 10% by mole, based on the total number of moles of the dicarboxylic acid repeat unit. The content of the terephthalic acid repeat unit (content of the terephthalic acid repeat unit contained in the polyester resin) is not particularly limited, but it may be 1 to 100% by mole, 2 to 100% by mole, 3 to 100% by mole, 4 to 100% by mole, 90 to 96% by mole, 90 to 97% by mole, 90 to 98% by mole, or 90 to 99% by mole, based on the total number of moles of the dicarboxylic acid repeat unit. As the content of the isophthalic acid repeat unit and the content of the terephthalic acid repeat unit are each within the above range, a polyester resin having excellent thermal resistance, chemical resistance, impact resistance, and productivity can be provided.

Elements contained in the polyester resin according to the present invention may comprise at least one selected from the group consisting of germanium (Ge), zinc (Zn), and phosphorus (P). Here, the above elements, germanium (Ge), zinc (Zn), and phosphorus (P), can satisfy the content ratios (weight ratios) according to the following Relationships 1 and 2.

$$[\text{Relationship 1}]$$

$$1 \leq \text{Ge/Zn} \leq 30$$

$$[\text{Relationship 2}]$$

$$1 \leq (\text{Ge} + \text{Zn})/\text{P} \leq 15$$

Specifically, when the polyester resin comprises germanium (Ge) and zinc (Zn), the ratio of Ge/Zn, which is the content ratio between them, may be 1 to 30. More specifically, the ratio of Ge/Zn may be 1.1 to 29, 1.2 to 29, 1.3 to 28, 1.4 to 28, 1.5 to 27, 1.6 to 27, 1.8 to 26, 2 to 24, 2.5 to 22, 3 to 20, 5 to 19, 8 to 17, or 9 to 16. As the ratio of Ge/Zn is within the above range, a polyester resin having significantly excellent color characteristics and a desired intrinsic viscosity (IV) can be provided.

Meanwhile, when the polyester resin comprises germanium (Ge), zinc (Zn), and phosphorus (P), the ratio of (Ge + Zn)/P, which is the content ratio between them, may be 1 to 15. Specifically, the ratio of (Ge + Zn)/P may be 1.1 to 14.8, 1.2 to 14.6, 1.3 to 14.4, 1.4 to 14.2, 1.5 to 14, 1.6 to 13.8, 1.8 to 13.4, 2 to 13.2, 2.5 to 13, 3 to 12.5, 3.3 to 12, 3.5 to 11, 3.8 to 10, or 4 to 9.5. As the ratio of (Ge + Zn)/P is within the above range, a polyester resin having significantly excellent thermal resistance, chemical resistance, and color characteristics can be provided with high efficiency. In particular, when the ratio of (Ge + Zn)/P is within the above range, the productivity of a polyester resin can be maximized.

Germanium (Ge), an element contained in the polyester resin according to the present invention, may be derived from a germanium (Ge)-containing catalyst. The germanium (Ge)-containing catalyst may not be particularly limited as long as it is a commonly known catalyst. Specifically, the germanium (Ge)-containing catalyst may comprise at least one selected from the group consisting of salts of aliphatic carboxylic acids containing germanium (Ge), salts of aromatic carboxylic acids containing germanium (Ge), salts of halogenated carboxylic acids containing germanium (Ge), salts of hydroxycarbonates containing germanium (Ge), salts of minerals containing germanium (Ge), organosulfonates containing germanium (Ge), organosulfates containing germanium (Ge), alkoxides containing germanium (Ge), acetylacetonates containing germanium (Ge), oxides containing germanium (Ge), metals containing germanium (Ge), and hydroxides containing germanium (Ge).

The salts of aliphatic carboxylic acids containing germanium (Ge) are not particularly limited, but they may specifically be formates, acetates (e.g., germanium acetate), propionates, butyrates, oxalates, acrylates or methacrylates that contain germanium (Ge).

The salts of aromatic carboxylic acids containing germanium (Ge) are not particularly limited, but they may specifically be benzoates that contain germanium (Ge).

The salts of halogenated carboxylic acids containing germanium (Ge) are not particularly limited, but they may specifically be trichloroacetates or trifluoroacetates that contain germanium (Ge).

The salts of hydroxycarbonates containing germanium (Ge) are not particularly limited, but they may specifically be lactates, citrates, or oxalates that contain germanium (Ge).

The salts of minerals containing germanium (Ge) are not particularly limited, but they may specifically be carbonates, sulfates, nitrates, phosphates, phosphonates, phosphinates, hydrogen sulfates, hydrogen carbonates, hydrogen phosphates, sulfites, thiosulfates, hydrochlorides, hydrobromides, chlorides (e.g., germanium tetrachloride), chlorates, bromides, or boromates that contain germanium (Ge).

The organosulfonates containing germanium (Ge) are not particularly limited, but they may specifically be 1-propane-sulfonates, 1-pentane sulfonates, or naphthalenesulfonates that contain germanium (Ge).

The organosulfates containing germanium (Ge) are not particularly limited, but they may specifically be lauryl sulfates that contain germanium (Ge).

The alkoxides containing germanium (Ge) are not particularly limited, but they may specifically be methoxides, ethoxides, propoxides, iso-propoxides, or butoxides that contain germanium (Ge).

The oxides containing germanium (Ge) are not particularly limited, but they may specifically be germanium dioxide ($GeO_2$).

The content of germanium (Ge) derived from such a germanium (Ge)-containing catalyst is not particularly limited, but it may be 10 to 500 ppm, 30 to 500 ppm, 40 to 490 ppm, 80 to 490 ppm, 105 to 480 ppm, 120 to 480 ppm, 130 to 470 ppm, 140 to 460 ppm, 150 to 450 ppm, 155 to 430 ppm, or 155 to 420 ppm, based on the total weight of the polyester resin. As the content of germanium (Ge) is within the above range, the above Relationships 1 and 2 are satisfied, whereby a polyester resin having excellent color characteristics can be prepared with high efficiency.

Zinc (Zn), an element contained in the polyester resin according to the present invention, may be derived from a zinc (Zn)-containing catalyst. The zinc (Zn)-containing catalyst may not be particularly limited as long as it is a commonly known catalyst. Specifically, the zinc (Zn)-containing catalyst may comprise at least one selected from the group consisting of zinc acetate, zinc acetate dihydrate, zinc chloride, zinc sulfate, zinc sulfide, zinc carbonate, zinc citrate, and zinc gluconate.

The content of zinc (Zn) derived from such a zinc (Zn)-containing catalyst is not particularly limited, but it may be 5 to 200 ppm, 6 to 200 ppm, 7 to 190 ppm, 8 to 190 ppm, 9 to 180 ppm, 9 to 170 ppm, 10 to 170 ppm, 10 to 160 ppm, 10 to 155 ppm, 11 to 150 ppm, or 16 to 150 ppm, based on the total weight of the polyester resin. As the content of zinc (Zn) is within the above range, the above Relationships 1 and 2 are satisfied, whereby a polyester resin having excellent color characteristics can be prepared with high efficiency.

Phosphorus (P), an element contained in the polyester resin according to the present invention, may be derived from a phosphorus (P)-containing stabilizer. The phosphorus (P)-containing stabilizer may not be particularly limited as long as it is a commonly known stabilizer. Specifically, the phosphorus (P)-containing stabilizer may comprise at least one selected from the group consisting of phosphoric acid, trimethyl phosphate, triethyl phosphate, triphenyl phosphate, and triethyl phosphonoacetate.

The content of phosphorus (P) derived from such a phosphorus (P)-containing stabilizer is not particularly limited, but it may be 1 to 250 ppm, 1 to 245 ppm, 2 to 245 ppm, 2 to 240 ppm, 3 to 235 ppm, 3 to 230 ppm, 4 to 225 ppm, 4 to 220 ppm, 10 to 215 ppm, 20 to 210 ppm, or 25 to 205 ppm, based on the total weight of the polyester resin. As the content of phosphorus (P) is within the above range, the above Relationships 1 and 2 are satisfied, whereby a polyester resin having excellent color characteristics can be prepared with high efficiency.

Meanwhile, the polyester resin according to the present invention may, or may not, further comprise elements derived from additives used in the preparation of the polyester resin (e.g., titanium (Ti), silicon (Si), antimony (Sb), tin (Sn), aluminum (Al), or the like) in addition to germanium (Ge), zinc (Zn), and phosphorus (P).

As described above, in the present invention, germanium (Ge), zinc (Zn), and phosphorus (P), which are specific elements among various elements to be contained in the polyester resin, are contained in the polyester resin to satisfy the above Relationships 1 and 2. As a result, it is possible to provide a polyester resin that has excellent basic physical properties such as thermal resistance, chemical resistance, and impact resistance, along with significantly enhanced color characteristics. In addition, in the present invention, a polyester resin is prepared such that germanium (Ge), zinc (Zn), and phosphorus (P) satisfy the above Relationships 1 and 2. As a result, it is possible to provide a polyester resin having a desired intrinsic viscosity (IV), along with maximized productivity of the polyester resin.

Specifically, the polyester resin according to the present invention may have a col-b value of -4 to +4 in the pellet state, indicating excellent color characteristics (e.g., transparency). More specifically, the col-b value of in the pellet state may be -4 to +3.5, -3.8 to +3, -3.6 to +2.6, -3.3 to +2, or -3 to +1.5. Col-b is a color coordinate established by the Commission International d'Eclairage (CIE), where color is represented by "yellow to blue complementary color." It may be measured using UltraScan PRO (manufacturer: Hunterlab).

In addition, the polyester resin according to the present invention may have an intrinsic viscosity (IV) at 35°C of 0.6 to 1.3 dl/g, specifically, 0.6 to 1.28 dl/g, 0.6 to 1.25 dl/g, 0.6 to 1.23 dl/g, 0.6 to 1.2 dl/g, or 0.6 to 1.15 dl/g. As the intrinsic viscosity is within the above range, the processability of the polyester resin can be secured.

The polyester resin according to the present invention may be a homopolymer or a copolymer. Specifically, the polyester resin may be selected from the group consisting of polyethylene terephthalate (PET), polyethylene terephthalate glycol (PETG), polyester sulfone (PES), polybutylene terephthalate (PBT), polytrimethylene terephthalate (PTT), polybutylene adipate-co-terephthalate (PBAT), polypropylene adipate-co-terephthalate (PPAT), polycyclohexane dimethyl terephthalate (PCT), and thermoplastic polyester elastomer (TPEE).

The polyester resin according to the present invention may be in the form of chips, pellets, or powder.

**Process for preparing a polyester resin**

The present invention provides a process for preparing the polyester resin described above. Specifically, the process for preparing a polyester resin comprises feeding a diol component and a dicarboxylic acid component to a reactor (S-1); feeding at least one of a germanium (Ge)-containing catalyst and a zinc (Zn)-containing catalyst and a phosphorus (P)-containing stabilizer to the reactor (S-2); subjecting the diol component and the dicarboxylic acid component to an esterification reaction in the presence of the catalyst and the stabilizer to prepare an oligomer (S-3); and subjecting the oligomer to a polycondensation reaction (S-4), which will be described in detail as follows.

Step (S-1): Feeding of raw materials

Step (S-1) is a step of feeding a diol component and a dicarboxylic acid component to a reactor. Since the diol component and the dicarboxylic acid component are the same as described above, a description thereon is omitted.

When the diol component and the dicarboxylic acid component are fed to a reactor, the feeding molar ratio thereof (the number of moles of the diol component/the number of moles of the dicarboxylic acid component) is not particularly limited, but it may be 1.1 to 2, 1.1 to 1.9, 1.1 to 1.8, or 1.1 to 1.7, in light of the efficiency of the esterification reaction and polycondensation reaction described later.

A batch reactor or a continuous reactor may be used as the reactor.

Step (S-2): Feeding of a catalyst and a stabilizer

Step (S-2) is a step of feeding at least one of a germanium (Ge)-containing catalyst and a zinc (Zn)-containing catalyst and a phosphorus (P)-containing stabilizer to the reactor. Since the germanium (Ge)-containing catalyst, the zinc (Zn)-containing catalyst, and the phosphorus (P)-containing stabilizer are the same as described above, a description thereon is omitted.

Meanwhile, a commonly known additive comprising at least one selected from the group consisting of a catalyst, a colorant, a crystallizing agent, an antioxidant, and a branching agent may be further fed to the reactor in addition to the germanium (Ge)-containing catalyst and/or the zinc (Zn)-containing catalyst and the phosphorus (P)-containing stabilizer.

The catalyst may be methylates of sodium and magnesium; acetates, borates, fatty acid salts, or carbonates of Cd, Mn, Co, Ca, and Ba; and oxides or hydrates of Mg, Pb, Mn, Ti, Sb, Sn, and Al. Examples of the catalyst include tetraethyl titanate, acetyltripropyl titanate, tetrapropyl titanate, tetrabutyl titanate, 2-ethylhexyl titanate, lactate titanate, octylene glycol titanate, triethanolamine titanate, acetylacetonate titanate, ethylacetoacetic ester titanate, isostearyl titanate, titanium dioxide, and a combination thereof.

As the colorant, organic compounds such as cobalt-based compounds, anthraquinone-based compounds, perinone-based compounds, azo-based compounds, and methine-based compounds (for example, cobalt acetate, cobalt propionate, Polysynthren Blue RLS toner of Clariant, and Solvaperm Red BB toner of Clariant) may be used.

As the crystallizing agent, a crystal nucleating agent, an ultraviolet absorber, a polyolefin resin, a polyamide resin, or the like may be used.

As the antioxidant, hindered phenol-based compounds, phosphite-based compounds, thioether-based compounds, or the like may be used.

As the branching agent, trimellitic anhydride, trimethylol propane, trimellitic acid, or the like may be used.

Step (S-2) may be carried out after step (S-1) or may be carried out simultaneously with step (S-1). In addition, the germanium (Ge)-containing catalyst, the zinc (Zn)-containing catalyst, the phosphorus (P)-containing stabilizer, and the additives may be fed when step (S-3) and/or step (S-4), which will be described later, is carried out.

Step (S-3): Esterification reaction

Step (S-3) is a step of subjecting the diol component and the dicarboxylic acid component to an esterification reaction in the presence of at least one of the germanium (Ge)-containing catalyst and the zinc (Zn)-containing catalyst and the phosphorus (P)-containing stabilizer to prepare an oligomer.

The conditions under which the esterification reaction is carried out may not be particularly limited. Specifically, the temperature at which the esterification reaction is carried out may be 200 to 300°C, more specifically, 220 to 300°C, 230 to 295°C, 240 to 290°C, 250 to 285°C, or 260 to 280°C. In addition, the pressure at which the esterification reaction is carried out may be 0.1 to 5 kgf/cm$^2$, specifically, 0.2 to 4.5 kgf/cm$^2$, 0.3 to 4 kgf/cm$^2$, 0.4 to 3.5 kgf/cm$^2$, or 0.5 to 3 kgf/cm$^2$. The period of time during which the esterification reaction is carried out may be 2 to 10 hours, specifically, 3 to 9 hours, 3.5 to 8.5 hours, 3.5 to 8 hours, or 4 to 7.5 hours. As the esterification reaction is carried out under the above conditions, the production of side reactants is minimized while an oligomer having the desired molecular weight can be obtained in high yield.

Step (S-4): Polycondensation reaction

Step (S-4) is a step of subjecting the oligomer to a polycondensation reaction.

The conditions under which the polycondensation reaction is carried out may not be particularly limited. Specifically, the temperature at which the polycondensation reaction is carried out may be 220 to 300°C, more specifically, 230 to 300°C, 240 to 295°C, 250 to 290°C, or 260 to 285°C. In addition, the conditions under which the polycondensation reaction is carried out may be lower (reduced pressure) than normal pressure (e.g., 1 atm). The period of time during which the polycondensation reaction is carried out may be 1 to 24 hours, specifically, 1 to 20 hours, 2 to 15 hours, 3 to 10 hours, or 3.5 to 8 hours. As the polycondensation reaction is carried out under the above conditions, a polyester resin (polymer) having the desired intrinsic viscosity and color characteristics can be efficiently produced while by-products are smoothly discharged.

The polyester resin of the present invention prepared through steps (S-1) to (S-4) has the content ratios of germanium (Ge), zinc (Zn), and phosphorus (P) satisfying the following Relationships 1 and 2. Since the ratio of Ge/Zn in the following Relationship 1 and the ratio of (Ge + Zn)/P in the following Relationship 2 are the same as described above, a description thereon is omitted.

$$[\text{Relationship 1}]$$

$$1 \leq \text{Ge/Zn} \leq 30$$

$$[\text{Relationship 2}]$$

$$1 \leq (\text{Ge} + \text{Zn})/\text{P} \leq 15$$

In the process for preparing a polyester resin according to the present invention, a polyester resin that satisfies the above Relationships 1 and 2 is prepared. Thus, a polyester resin with excellent color characteristics can be provided with high productivity.

Specifically, when a polyester resin is prepared by the process for preparing a polyester resin according to the present invention, productivity is enhanced, whereby the preparation process can have a process consumption rate ($T_c$) of less than 65% according to the following Relationship 3. More specifically, the process consumption rate ($T_c$) may be 64% or less, 62% or less, 61% or less, 60% or less, 59% or less, 57% or less, 55% or less, 53% or less, 51% or less, 48% or less, or 45% or less (e.g., 5 to less than 65%, 10 to 63%, 15 to 60%, 20 to 58%, 25 to 53%, 30 to 50%, or 35 to 48%).

$$[\text{Relationship 3}]$$

$$T_c \, (\%) = (T_{c2}/T_{c1} + T_{c2}) \times 100$$

In Relationship 3, $T_{c1}$ is the time spent on the esterification reaction during the process for preparing the polyester resin (time spent in step (S-3)), and $T_{c2}$ is the time spent on the polycondensation reaction during the process for preparing the polyester resin (time spent in step (S-4)).

In addition, when a polyester resin is prepared by the process for preparing a polyester resin according to the present invention, productivity is enhanced, whereby the preparation process can have a productivity improvement (PI) of 1 or more according to the following Relationship 4. Specifically, the productivity improvement (PI) may be 1.1 or more, 1.13 or more, 1.15 or more, 1.18 or more, 1.2 or more, 1.23 or more, 1.25 or more, 1.28 or more, 1.3 or more, 1.33 or more, 1.36 or more, 1.4 or more, 1.45 or more, 1.5 or more, 1.65 or more, 1.75 or more, 1.9 or more, or 2 or more (e.g., 1 to 2.5, 1.11 to 2.3, 1.15 to 2.1, 1.2 to 2, 1.25 to 1.95, or 1.35 to 1.93).

$$[\text{Relationship 4}]$$

$$PI = IV \times (T_{c1} + T_{c2}/T_{c2})$$

In Relationship 4, IV is the intrinsic viscosity of the polyester resin, $T_{c1}$ is the time spent on the esterification reaction during the process for preparing the polyester resin, and $T_{c2}$ is the time spent on the polycondensation reaction during the process for preparing the polyester resin.

Meanwhile, steps (S-1) to (S-4) may be carried out continuously. By-products (e.g., side reactants, unreacted diol components, unreacted dicarboxylic acid components, and the like) formed in step (S-3) and/or step (S-4) may be recovered and purified. Thereafter, the purified materials (e.g., ethylene glycol and the like) obtained through the above purification process may be reused as a reaction raw material.

**Mode for the Invention**

Hereinafter, the present invention will be described in more detail with reference to embodiments. However, these examples are provided only for illustration purposes, and the present invention is not limited thereto.

**[Example 1]**

Recycled bis(2-hydroxyethyl) terephthalate (r-BHET, 531.2 kg/hr), terephthalic acid (TPA, 1,388.7 kg/hr), ethylene glycol (EG, 415.0 kg/hr), 1,4-cyclohexanedimethanol (CHDM, 150.6 kg/hr), isosorbide (ISB, 61.1 kg/hr), and diethylene glycol (DEG, 22.2 kg/hr) were continuously fed to a continuous-type reactor equipped with a column and a condenser that can be cooled by water.

Subsequently, a Zn catalyst (zinc acetate, 0.09 kg/hr), a Ge catalyst ($GeO_2$, 1.3 kg/hr), a Ti catalyst (0.19 kg/hr), phosphoric acid (0.021 kg/hr), a blue toner (0.008 kg/hr), and a red toner (0.002 kg/hr) were continuously fed to the continuous-type reactor.

Subsequently, after the temperature of the continuous-type reactor was gradually raised to 260°C under a nitrogen atmosphere, an esterification reaction (ES) was carried out at 260°C under a pressure of 0.5 kgf/cm² for 7 hours to obtain an oligomer. Here, the esterification reaction was carried out while by-products such as ethylene glycol and water were discharged to the outside of the continuous-type reactor.

Subsequently, the oligomer was transferred to a polycondensation reactor, and a polycondensation reaction (PA) was then carried out at a temperature of 265°C while the pressure of the polycondensation reactor was maintained at a pressure lower than normal pressure. When the intrinsic viscosity (IV) of the reactant in the polycondensation reactor reached 0.60 dl/g, the reactant was then discharged from the polycondensation reactor. Here, the polycondensation reaction was carried out for 7 hours.

Subsequently, the reactant discharged from the polycondensation reactor was charged to a solid-state polymerization reactor. The temperature of the solid-state polymerization reactor was gradually raised to 200°C under a nitrogen atmosphere, and a solid-state polymerization reaction was then carried out at 200°C. When the intrinsic viscosity (IV) of the reactant in the solid-state polymerization reactor reached 1.3 dl/g, the reactant was discharged from the solid-state polymerization reactor to prepare a polyester resin (copolymer) in the form of pellets.

**[Example 2]**

Terephthalic acid (TPA, 1,578.9 kg/hr), ethylene glycol (EG, 357.7 kg/hr), 1,4-cyclohexanedimethanol (CHDM, 547.8 kg/hr), isosorbide (ISB, 185.2 kg/hr), and diethylene glycol (DEG, 10.1 kg/hr) were continuously fed to a continuous-type reactor equipped with a column and a condenser that can be cooled by water.

Subsequently, a Zn catalyst (zinc acetate, 0.06 kg/hr), a Ge catalyst (GeO$_2$, 5.3 kg/hr), a Ti catalyst (0.19 kg/hr), phosphoric acid (0.167 kg/hr), a blue toner (0.005 kg/hr), and a red toner (0.001 kg/hr) were continuously fed to the continuous-type reactor.

Subsequently, after the temperature of the continuous-type reactor was gradually raised to 255°C under a nitrogen atmosphere, an esterification reaction (ES) was carried out at 255°C under a pressure of 2 kgf/cm$^2$ for 5 hours to obtain an oligomer. Here, the esterification reaction was carried out while by-products such as ethylene glycol and water were discharged to the outside of the continuous-type reactor.

Subsequently, the oligomer was transferred to a polycondensation reactor, and a polycondensation reaction (PA) was then carried out at a temperature of 285°C while the pressure of the polycondensation reactor was maintained at a pressure lower than normal pressure. When the intrinsic viscosity (IV) of the reactant in the polycondensation reactor reached 0.7 dl/g, the reactant was then discharged from the polycondensation reactor. Here, the polycondensation reaction was carried out for 7 hours. Thereafter, the reactant discharged was subjected to a pelletizing process to prepare a polyester resin (copolymer) in the form of pellets.

**[Example 3]**

Recycled bis(2-hydroxyethyl) terephthalate (r-BHET, 112.0 kg/hr), terephthalic acid (TPA, 1,390.9 kg/hr), ethylene glycol (EG, 47.4 kg/hr), 1,4-cyclohexanedimethanol (CHDM, 889.1 kg/hr), isosorbide (ISB, 377.7 kg/hr), and diethylene glycol (DEG, 9.3 kg/hr) were continuously fed to a continuous-type reactor equipped with a column and a condenser that can be cooled by water.

Subsequently, a Zn catalyst (zinc acetate, 0.88 kg/hr), a Ge catalyst (GeO$_2$, 13.3 kg/hr), phosphoric acid (0.938 kg/hr), a blue toner (0.006 kg/hr), and a red toner (0.002 kg/hr) were continuously fed to the continuous-type reactor.

Subsequently, after the temperature of the continuous-type reactor was gradually raised to 265°C under a nitrogen atmosphere, an esterification reaction (ES) was carried out at 265°C under a pressure of 1 kgf/cm$^2$ for 4 hours to obtain an oligomer. Here, the esterification reaction was carried out while by-products such as ethylene glycol and water were discharged to the outside of the continuous-type reactor.

Subsequently, the oligomer was transferred to a polycondensation reactor, and a polycondensation reaction (PA) was then carried out at a temperature of 270°C while the pressure of the polycondensation reactor was maintained at a pressure lower than normal pressure. When the intrinsic viscosity (IV) of the reactant in the polycondensation reactor reached 0.75 dl/g, the reactant was then discharged from the polycondensation reactor. Here, the polycondensation reaction was carried out for 6 hours. Thereafter, the reactant discharged was subjected to a pelletizing process to prepare a polyester resin (copolymer) in the form of pellets.

**[Example 4]**

Recycled bis(2-hydroxyethyl) terephthalate (r-BHET, 982.8 kg/hr), terephthalic acid (TPA, 481.7 kg/hr), isophthalic acid (IPA, 642.3 kg/hr), ethylene glycol (EG, 28.0 kg/hr), 1,4-cyclohexanedimethanol (CHDM, 487.5 kg/hr), isosorbide (ISB, 188.3 kg/hr), and diethylene glycol (DEG, 20.5 kg/hr) were continuously fed to a continuous-type reactor equipped with a column and a condenser that can be cooled by water.

Subsequently, a Zn catalyst (zinc acetate, 0.18 kg/hr), a Ge catalyst (GeO$_2$, 9.3 kg/hr), a Ti catalyst (0.19 kg/hr), phosphoric acid (1.042 kg/hr), and a blue toner (0.01 kg/hr) were continuously fed to the continuous-type reactor.

Subsequently, after the temperature of the continuous-type reactor was gradually raised to 268°C under a nitrogen atmosphere, an esterification reaction (ES) was carried out at 268°C under a pressure of 3 kgf/cm$^2$ for 5 hours to obtain an oligomer. Here, the esterification reaction was carried out while by-products such as ethylene glycol and water were discharged to the outside of the continuous-type reactor.

Subsequently, the oligomer was transferred to a polycondensation reactor, and a polycondensation reaction (PA) was then carried out at a temperature of 280°C while the pressure of the polycondensation reactor was maintained at a pressure lower than normal pressure. When the intrinsic viscosity (IV) of the reactant in the polycondensation reactor reached 0.85 dl/g, the reactant was then discharged from the polycondensation reactor. Here, the polycondensation reaction was carried out for 4 hours. Thereafter, the reactant discharged was subjected to a pelletizing process to prepare a polyester resin (copolymer) in the form of pellets.

**[Example 5]**

Recycled bis(2-hydroxyethyl) terephthalate (r-BHET, 962.4 kg/hr), terephthalic acid (TPA, 943.4 kg/hr), ethylene glycol (EG, 13.7 kg/hr), 1,4-cyclohexanedimethanol (CHDM, 818.4 kg/hr), isosorbide (ISB, 645.4 kg/hr), and diethylene glycol (DEG, 10.0 kg/hr) were continuously fed to a continuous-type reactor equipped with a column and a condenser that can be cooled by water.
Subsequently, a Zn catalyst (zinc acetate, 0.06 kg/hr), a Ge catalyst (GeO$_2$, 8.8 kg/hr), phosphoric acid (0.313 kg/hr), a blue toner (0.01 kg/hr), and a red toner (0.004 kg/hr) were continuously fed to the continuous-type reactor.
Subsequently, after the temperature of the continuous-type reactor was gradually raised to 270°C under a nitrogen atmosphere, an esterification reaction (ES) was carried out at 270°C under a pressure of 3 kgf/cm$^2$ for 5 hours to obtain an oligomer. Here, the esterification reaction was carried out while by-products such as ethylene glycol and water were discharged to the outside of the continuous-type reactor.
Subsequently, the oligomer was transferred to a polycondensation reactor, and a polycondensation reaction (PA) was then carried out at a temperature of 280°C while the pressure of the polycondensation reactor was maintained at a pressure lower than normal pressure. When the intrinsic viscosity (IV) of the reactant in the polycondensation reactor reached 0.65 dl/g, the reactant was then discharged from the polycondensation reactor. Here, the polycondensation reaction was carried out for 4 hours. Thereafter, the reactant discharged was subjected to a pelletizing process to prepare a polyester resin (copolymer) in the form of pellets.

**[Example 6]**

Recycled bis(2-hydroxyethyl) terephthalate (r-BHET, 553.7 kg/hr), terephthalic acid (TPA, 1,447.5 kg/hr), ethylene glycol (EG, 4.5 kg/hr), 1,4-cyclohexanedimethanol (CHDM, 627.8 kg/hr), isosorbide (ISB, 1,167.0 kg/hr), and diethylene glycol (DEG, 11.6 kg/hr) were continuously fed to a continuous-type reactor equipped with a column and a condenser that can be cooled by water.
Subsequently, a Zn catalyst (zinc acetate, 0.58 kg/hr), a Ge catalyst (GeO$_2$, 5.3 kg/hr), phosphoric acid (0.146 kg/hr), a blue toner (0.01 kg/hr), and a red toner (0.004 kg/hr) were continuously fed to the continuous-type reactor.
Subsequently, after the temperature of the continuous-type reactor was gradually raised to 275°C under a nitrogen atmosphere, an esterification reaction (ES) was carried out at 275°C under a pressure of 3 kgf/cm$^2$ for 5 hours to obtain an oligomer. Here, the esterification reaction was carried out while by-products such as ethylene glycol and water were discharged to the outside of the continuous-type reactor.
Subsequently, the oligomer was transferred to a polycondensation reactor, and a polycondensation reaction (PA) was then carried out at a temperature of 277°C while the pressure of the polycondensation reactor was maintained at a pressure lower than normal pressure. When the intrinsic viscosity (IV) of the reactant in the polycondensation reactor reached 0.6 dl/g, the reactant was then discharged from the polycondensation reactor. Here, the polycondensation reaction was carried out for 4 hours. Thereafter, the reactant discharged was subjected to a pelletizing process to prepare a polyester resin (copolymer) in the form of pellets.

**[Comparative Example 1]**

Recycled bis(2-hydroxyethyl) terephthalate (r-BHET, 159.4 kg/hr), terephthalic acid (TPA, 937.4 kg/hr), ethylene glycol (EG, 451.3 kg/hr), 1,4-cyclohexanedimethanol (CHDM, 90.4 kg/hr), and isosorbide (ISB, 36.6 kg/hr) were continuously fed to a continuous-type reactor equipped with a column and a condenser that can be cooled by water.
Subsequently, a Ge catalyst (GeO$_2$, 0.8 kg/hr), a Ti catalyst (0.11 kg/hr), phosphoric acid (0.125 kg/hr), a blue toner (0.003 kg/hr), and a red toner (0.001 kg/hr) were continuously fed to the continuous-type reactor.
Subsequently, after the temperature of the continuous-type reactor was gradually raised to 255°C under a nitrogen atmosphere, an esterification reaction (ES) was carried out at 255°C under a pressure of 2 kgf/cm$^2$ for 6 hours to obtain an oligomer. Here, the esterification reaction was carried out while by-products such as ethylene glycol and water were discharged to the outside of the continuous-type reactor.
Subsequently, the oligomer was transferred to a polycondensation reactor, and a polycondensation reaction (PA) was then carried out at a temperature of 265°C while the pressure of the polycondensation reactor was maintained at a pressure lower than normal pressure. When the intrinsic viscosity (IV) of the reactant in the polycondensation reactor reached 0.7 dl/g, the reactant was then discharged from the polycondensation reactor. Here, the polycondensation reaction was carried out for 11 hours. Thereafter, the reactant discharged was subjected to a pelletizing process to prepare a polyester resin (copolymer) in the form of pellets.

**[Comparative Example 2]**

Terephthalic acid (TPA, 878.5 kg/hr), ethylene glycol (EG, 146.6 kg/hr), 1,4-cyclohexanedimethanol (CHDM, 533.4 kg/hr), isosorbide (ISB, 226.6 kg/hr), and diethylene glycol (DEG, 5.6 kg/hr) were continuously fed to a continuous-type reactor equipped with a column and a condenser that can be cooled by water.

Subsequently, a Zn catalyst (zinc acetate, 0.11 kg/hr), a Ge catalyst (GeO$_2$, 0.8 kg/hr), a blue toner (0.003 kg/hr), and a red toner (0.001 kg/hr) were continuously fed to the continuous-type reactor.

Subsequently, after the temperature of the continuous-type reactor was gradually raised to 265°C under a nitrogen atmosphere, an esterification reaction (ES) was carried out at 265°C under a pressure of 1 kgf/cm$^2$ for 5 hours to obtain an oligomer. Here, the esterification reaction was carried out while by-products such as ethylene glycol and water were discharged to the outside of the continuous-type reactor.

Subsequently, the oligomer was transferred to a polycondensation reactor, and a polycondensation reaction (PA) was then carried out at a temperature of 275°C while the pressure of the polycondensation reactor was maintained at a pressure lower than normal pressure. When the intrinsic viscosity (IV) of the reactant in the polycondensation reactor reached 0.75 dl/g, the reactant was then discharged from the polycondensation reactor. Here, the polycondensation reaction was carried out for 5 hours. Thereafter, the reactant discharged was subjected to a pelletizing process to prepare a polyester resin (copolymer) in the form of pellets.

**[Comparative Example 3]**

Recycled bis(2-hydroxyethyl) terephthalate (r-BHET, 577.4 kg/hr), terephthalic acid (TPA, 566.1 kg/hr), ethylene glycol (EG, 8.2 kg/hr), 1,4-cyclohexanedimethanol (CHDM, 491.0 kg/hr), isosorbide (ISB, 387.2 kg/hr), and diethylene glycol (DEG, 6.0 kg/hr) were continuously fed to a continuous-type reactor equipped with a column and a condenser that can be cooled by water.

Subsequently, a Zn catalyst (zinc acetate, 0.7 kg/hr), a Ge catalyst (GeO$_2$, 1.6 kg/hr), phosphoric acid (0.025 kg/hr), a blue toner (0.004 kg/hr), and a red toner (0.001 kg/hr) were continuously fed to the continuous-type reactor.

Subsequently, after the temperature of the continuous-type reactor was gradually raised to 275°C under a nitrogen atmosphere, an esterification reaction (ES) was carried out at 275°C under a pressure of 1 kgf/cm$^2$ for 5 hours to obtain an oligomer. Here, the esterification reaction was carried out while by-products such as ethylene glycol and water were discharged to the outside of the continuous-type reactor.

Subsequently, the oligomer was transferred to a polycondensation reactor, and a polycondensation reaction (PA) was then carried out at a temperature of 280°C while the pressure of the polycondensation reactor was maintained at a pressure lower than normal pressure. When the intrinsic viscosity (IV) of the reactant in the polycondensation reactor reached 0.5 dl/g, the reactant was then discharged from the polycondensation reactor. Here, the polycondensation reaction was carried out for 10 hours. Thereafter, the reactant discharged was subjected to a pelletizing process to prepare a polyester resin (copolymer) in the form of pellets.

**[Comparative Example 4]**

Recycled bis(2-hydroxyethyl) terephthalate (r-BHET, 144.4 kg/hr), terephthalic acid (TPA, 849.1 kg/hr), ethylene glycol (EG, 219.6 kg/hr), 1,4-cyclohexanedimethanol (CHDM, 491.0 kg/hr), isosorbide (ISB, 387.2 kg/hr), and diethylene glycol (DEG, 6.0 kg/hr) were continuously fed to a continuous-type reactor equipped with a column and a condenser that can be cooled by water.

Subsequently, a Zn catalyst (zinc acetate, 0.18 kg/hr), a Ge catalyst (GeO$_2$, 1.6 kg/hr), phosphoric acid (0.438 kg/hr), a blue toner (0.006 kg/hr), and a red toner (0.003 kg/hr) were continuously fed to the continuous-type reactor.

Subsequently, after the temperature of the continuous-type reactor was gradually raised to 275°C under a nitrogen atmosphere, an esterification reaction (ES) was carried out at 275°C under a pressure of 1 kgf/cm$^2$ for 4 hours to obtain an oligomer. Here, the esterification reaction was carried out while by-products such as ethylene glycol and water were discharged to the outside of the continuous-type reactor.

Subsequently, the oligomer was transferred to a polycondensation reactor, and a polycondensation reaction (PA) was then carried out at a temperature of 280°C while the pressure of the polycondensation reactor was maintained at a pressure lower than normal pressure. When the intrinsic viscosity (IV) of the reactant in the polycondensation reactor reached 0.5 dl/g, the reactant was then discharged from the polycondensation reactor. Here, the polycondensation reaction was carried out for 12 hours. Thereafter, the reactant discharged was subjected to a pelletizing process to prepare a polyester resin (copolymer) in the form of pellets.

**[Comparative Example 5]**

Recycled bis(2-hydroxyethyl) terephthalate (r-BHET, 166.1 kg/hr), terephthalic acid (TPA, 977.0 kg/hr), ethylene glycol (EG, 225.7 kg/hr), 1,4-cyclohexanedimethanol (CHDM, 376.7 kg/hr), isosorbide (ISB, 700.2 kg/hr), and diethylene glycol (DEG, 6.9 kg/hr) were continuously fed to a continuous-type reactor equipped with a column and a condenser that can be cooled by water.

Subsequently, a Zn catalyst (zinc acetate, 0.04 kg/hr), a Ge catalyst (GeO$_2$, 6.4 kg/hr), phosphoric acid (0.088 kg/hr), a blue toner (0.006 kg/hr), and a red toner (0.003 kg/hr) were continuously fed to the continuous-type reactor.

Subsequently, after the temperature of the continuous-type reactor was gradually raised to 275°C under a nitrogen atmosphere, an esterification reaction (ES) was carried out at 275°C under a pressure of 1 kgf/cm$^2$ for 5 hours to obtain an oligomer. Here, the esterification reaction was carried out while by-products such as ethylene glycol and water were discharged to the outside of the continuous-type reactor.

Subsequently, the oligomer was transferred to a polycondensation reactor, and a polycondensation reaction (PA) was then carried out at a temperature of 280°C while the pressure of the polycondensation reactor was maintained at a pressure lower than normal pressure. When the intrinsic viscosity (IV) of the reactant in the polycondensation reactor reached 0.6 dl/g, the reactant was then discharged from the polycondensation reactor. Here, the polycondensation reaction was carried out for 8 hours. Thereafter, the reactant discharged was subjected to a pelletizing process to prepare a polyester resin (copolymer) in the form of pellets.

The conditions for the process for preparing a polyester resin in Examples 1 to 6 and Comparative Examples 1 to 5 are summarized in Table 1 below.

**[Table 1]**

|  | Spent time (h) in the ES reaction | Spent time (h) in the PA reaction | Melt intrinsic viscosity (IV, dl/g) |
|---|---|---|---|
| Ex. 1 | 7 | 7 | 0.6 |
| Ex. 2 | 5 | 7 | 0.7 |
| Ex. 3 | 4 | 6 | 0.75 |
| Ex. 4 | 5 | 4 | 0.85 |
| Ex. 5 | 5 | 4 | 0.65 |
| Ex. 6 | 5 | 4 | 0.6 |
| C. Ex. 1 | 6 | 11 | 0.7 |
| C. Ex. 2 | 5 | 5 | 0.75 |
| C. Ex. 3 | 5 | 10 | 0.5 |
| C. Ex. 4 | 4 | 12 | 0.5 |
| C. Ex. 5 | 5 | 8 | 0.6 |

**[Test Example 1]**

The contents of germanium (Ge), zinc (Zn), and phosphorus (P) remaining in each of the pellet-type polyester resins prepared in Examples 1 to 6 and Comparative Examples 1 to 5 were each analyzed. The content ratios between them were calculated and shown in Table 2 below. The analysis of germanium (Ge), zinc (Zn), and phosphorus (P) was performed using inductively coupled plasma atomic emission spectroscopy (ICP-AES).

**[Test Example 2]**

The color of each of the pellet-type polyester resins prepared in Examples 1 to 6 and Comparative Examples 1 to 5 was analyzed. The results are shown in Table 2 below. The color analysis was performed by measuring the chromaticity and brightness of the pellet-type polyester resin using a Varian Cary 5 UV/Vis/NIR spectrophotometer equipped with a diffuse reflection accessory. Next, transmission data were obtained with Illuminant D65 at an observer's angle of 2°, which were processed through the color analysis equipment within the Grams/32 software to calculate the Hunter Lab values to obtain a color-b value.

**[Test Example 3]**

The process consumption rate ($T_c$) according to the following Relationship 3 was calculated from the time spent in each of the reactions for preparing the pellet-type polyester resins in Examples 1 to 6 and Comparative Examples 1 to 5. The results are shown in Table 2 below.

$$[\text{Relationship 3}]$$

$$T_c\ (\%) = (T_{c2}/T_{c1} + T_{c2}) \times 100$$

In Relationship 3, $T_{c1}$ is the time spent on the esterification (ES) reaction during the process for preparing the polyester resin, and $T_{c2}$ is the time spent on the polycondensation (PA) reaction during the process for preparing the polyester resin.

**[Test Example 4]**

The productivity Improvement (PI) according to the following Relationship 4 was calculated from the intrinsic viscosity of each of the pellet-type polyester resins prepared in Examples 1 to 6 and Comparative Examples 1 to 5 and the time spent in each of the reactions. The results are shown in Table 2 below.

$$[\text{Relationship 4}]$$

$$PI = IV \times (T_{c1} + T_{c2}/T_{c2})$$

In Relationship 4, IV is the intrinsic viscosity of the polyester resin, $T_{c1}$ is the time spent on the esterification (ES) reaction during the process for preparing the polyester resin, and $T_{c2}$ is the time spent on the polycondensation (PA) reaction during the process for preparing the polyester resin.

**[Table 2]**

|  | Ge/Zn | (Ge + Zn)/P | Pellet col-b | $T_c$ (%) | PI |
|---|---|---|---|---|---|
| Ex. 1 | 2.7 | 13.8 | -3.5 | 50% | 1.2 |
| Ex. 2 | 16 | 5.3 | -2.5 | 58% | 1.2 |
| Ex. 3 | 2.7 | 3.1 | 0.1 | 60% | 1.25 |
| Ex. 4 | 9.3 | 1.6 | -1.8 | 44% | 1.91 |
| Ex. 5 | 26.4 | 4.6 | 1.5 | 44% | 1.46 |
| Ex. 6 | 1.6 | 9.3 | 3.5 | 44% | 1.35 |
| C. Ex. 1 | Zn not contained | 1 | 0.5 | 65% | 1.98 |
| C. Ex. 2 | 1.3 | P not contained | 4.5 | 50% | 1.5 |
| C. Ex. 3 | 0.4 | 35 | 7.5 | 67% | 0.75 |
| C. Ex. 4 | 1.6 | 0.9 | 8 | 75% | 0.67 |
| C. Ex. 5 | 32 | 11.8 | 8.5 | 62% | 0.98 |

Referring to Table 2 above, the polyester resins of Examples 1 to 6, in which the ratios of Ge/Zn and (Ge + Zn)/P were within the ranges of the present invention, had excellent color characteristics and high productivity.

Meanwhile, in the polyester resin of Comparative Example 1 in which a zinc (Zn)-containing catalyst was not used and the polyester resin of Comparative Example 2 in which a phosphorus (P)-containing stabilizer was not used, the color characteristics or productivity was poor. In particular, in Comparative Examples 3 to 5, in which the ratios of Ge/Zn and (Ge + Zn)/P were outside the ranges of the present invention, the color characteristics and productivity were significantly poor.

**Claims**

1. A polyester resin, which comprises a diol repeat unit derived from a diol component; and a dicarboxylic acid repeat unit derived from a dicarboxylic acid component,
   wherein the content ratios between germanium (Ge), zinc (Zn), and phosphorus (P) satisfy the following Relationships 1 and 2:

$$[\text{Relationship 1}]$$
$$1 \le \text{Ge/Zn} \le 30$$

$$[\text{Relationship 2}]$$
$$1 \le (\text{Ge} + \text{Zn})/\text{P} \le 15.$$

2. The polyester resin of claim 1, wherein the diol component comprises at least one selected from the group consisting of ethylene glycol, cyclohexanedimethanol, isosorbide, diethylene glycol, neopentyl glycol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, 4-(hydroxymethyl)cyclohexylmethyl-4-(hydroxymethyl)cyclohexanecarboxylate, 4-(4-(hydroxymethyl)cyclohexylmethoxymethyl)cyclohexylmethanol, bis(2-hydroxyethyl) terephthalate, and recycled bis(2-hydroxyethyl) terephthalate.

3. The polyester resin of claim 1, wherein the diol component comprises a first diol component comprising ethylene glycol; and a second diol component comprising at least one selected from the group consisting of cyclohexanedimethanol, isosorbide, diethylene glycol, bis(2-hydroxyethyl) terephthalate, recycled bis(2-hydroxyethyl) terephthalate, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol.

4. The polyester resin of claim 1, wherein the germanium (Ge) is derived from a germanium (Ge)-containing catalyst, and the zinc (Zn) is derived from a zinc (Zn)-containing catalyst.

5. The polyester resin of claim 4, wherein the germanium (Ge)-containing catalyst comprises at least one selected from the group consisting of salts of aliphatic carboxylic acids containing germanium (Ge), salts of aromatic carboxylic acids containing germanium (Ge), salts of halogenated carboxylic acids containing germanium (Ge), salts of hydroxycarbonates containing germanium (Ge), salts of minerals containing germanium (Ge), organosulfonates containing germanium (Ge), organosulfates containing germanium (Ge), alkoxides containing germanium (Ge), acetylacetonates containing germanium (Ge), oxides containing germanium (Ge), metals containing germanium (Ge), and hydroxides containing germanium (Ge).

6. The polyester resin of claim 4, wherein the zinc (Zn)-containing catalyst comprises at least one selected from the group consisting of zinc acetate, zinc acetate dihydrate, zinc chloride, zinc sulfate, zinc sulfide, zinc carbonate, zinc citrate, and zinc gluconate.

7. The polyester resin of claim 1, wherein the phosphorus (P) is derived from a phosphorus (P)-containing stabilizer.

8. The polyester resin of claim 7, wherein the phosphorus (P)-containing stabilizer comprises at least one selected from the group consisting of phosphoric acid, trimethyl phosphate, triethyl phosphate, triphenyl phosphate, and triethyl phosphonoacetate.

9. The polyester resin of claim 1, wherein the dicarboxylic acid component comprises at least one selected from the group consisting of isophthalic acid, terephthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

10. The polyester resin of claim 1, which, in the pellet state, has a col-b value of -4 to +4.

11. A process for preparing a polyester resin, which comprises:

feeding a diol component and a dicarboxylic acid component to a reactor;
feeding at least one of a germanium (Ge)-containing catalyst and a zinc (Zn)-containing catalyst and a phosphorus (P)-containing stabilizer to the reactor;
subjecting the diol component and the dicarboxylic acid component to an esterification reaction in the presence of the catalyst and the stabilizer to prepare an oligomer; and
subjecting the oligomer to a polycondensation reaction,
wherein the content ratios between germanium (Ge), zinc (Zn), and phosphorus (P) satisfy the above Relationships 1 and 2:

$$[\text{Relationship 1}]$$

$$1 \leq \text{Ge/Zn} \leq 30$$

$$[\text{Relationship 2}]$$

$$1 \leq (\text{Ge} + \text{Zn})/\text{P} \leq 15.$$

12. The process for preparing a polyester resin of claim 11, wherein the esterification reaction is carried out at a temperature of 200 to 300°C.

13. The process for preparing a polyester resin of claim 11, wherein the polycondensation reaction is carried out at a temperature of 220 to 300°C for 1 to 24 hours.

14. The process for preparing a polyester resin of claim 11, wherein the process consumption rate ($T_c$) is less than 65% according to the following Relationship 3:

$$[\text{Relationship 3}]$$

$$T_c\,(\%) = (T_{c2}/T_{c1} + T_{c2}) \times 100$$

in Relationship 3, $T_{c1}$ is the time spent on the esterification reaction during the process for preparing the polyester resin, and $T_{c2}$ is the time spent on the polycondensation reaction during the process for preparing the polyester resin.

15. The process for preparing a polyester resin of claim 11, wherein the productivity improvement (PI) is 1 or more according to the following Relationship 4:

$$[\text{Relationship 4}]$$

$$PI = IV \times (T_{c1} + T_{c2}/T_{c2})$$

in Relationship 4, IV is the intrinsic viscosity of the polyester resin, $T_{c1}$ is the time spent on the esterification reaction during the process for preparing the polyester resin, and $T_{c2}$ is the time spent on the polycondensation reaction during the process for preparing the polyester resin.

## INTERNATIONAL SEARCH REPORT

| | International application No. |
|---|---|
| | **PCT/KR2024/003454** |

| A. | CLASSIFICATION OF SUBJECT MATTER |
|---|---|

**C08G 63/82**(2006.01)i; **C08G 63/86**(2006.01)i; **C08G 63/83**(2006.01)i; **C08G 63/68**(2006.01)i; **C08G 63/692**(2006.01)i; **C08G 63/16**(2006.01)i; **C08K 5/521**(2006.01)i

According to International Patent Classification (IPC) or to both national classification and IPC

| B. | FIELDS SEARCHED |
|---|---|

Minimum documentation searched (classification system followed by classification symbols)

C08G 63/82(2006.01); C08G 63/02(2006.01); C08G 63/16(2006.01); C08G 63/181(2006.01); C08G 63/183(2006.01); C08G 63/199(2006.01); C08G 63/553(2006.01); C08G 63/83(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 디올(diol), 디카르복실산(dicarboxylic acid), 게르마늄 (germanium), 아연(zinc), 인(phosphorus), 촉매(catalyst), 안정제(stabilizer)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2013-0132138 A (SK CHEMICALS CO., LTD.) 04 December 2013 (2013-12-04) See claims 1-7; paragraphs [0030]-[0064]; and table 1. | 1-15 |
| A | KR 10-2016-0059287 A (LOTTE CHEMICAL CORPORATION) 26 May 2016 (2016-05-26) See entire document. | 1-15 |
| A | KR 10-2016-0053716 A (LOTTE CHEMICAL CORPORATION) 13 May 2016 (2016-05-13) See entire document. | 1-15 |
| A | KR 10-2016-0146080 A (SKC CO., LTD.) 21 December 2016 (2016-12-21) See entire document. | 1-15 |
| A | WO 2012-007958 A1 (PEARL ENGINEERING POLYMERS LTD. et al.) 19 January 2012 (2012-01-19) See entire document. | 1-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 June 2024** | **24 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/003454**

| Patent document cited in search report | | | Publication date (day/month/year) | Patent family member(s) | | | Publication date (day/month/year) |
|---|---|---|---|---|---|---|---|
| KR | 10-2013-0132138 | A | 04 December 2013 | CN | 104302688 | A | 21 January 2015 |
| | | | | EP | 2857431 | A1 | 08 April 2015 |
| | | | | EP | 2857431 | A4 | 10 February 2016 |
| | | | | EP | 2857431 | B1 | 28 August 2019 |
| | | | | JP | 2015-517606 | A | 22 June 2015 |
| | | | | JP | 6371278 | B2 | 08 August 2018 |
| | | | | KR | 10-1995457 | B1 | 02 July 2019 |
| | | | | US | 2015-0141612 | A1 | 21 May 2015 |
| | | | | US | 9284405 | B2 | 15 March 2016 |
| | | | | WO | 2013-176467 | A1 | 28 November 2013 |
| KR | 10-2016-0059287 | A | 26 May 2016 | KR | 10-1694892 | B1 | 10 January 2017 |
| KR | 10-2016-0053716 | A | 13 May 2016 | None | | | |
| KR | 10-2016-0146080 | A | 21 December 2016 | None | | | |
| WO | 2012-007958 | A1 | 19 January 2012 | CN | 103154078 | A | 12 June 2013 |
| | | | | CN | 103154078 | B | 19 June 2018 |
| | | | | EP | 2593494 | A1 | 22 May 2013 |
| | | | | EP | 2593494 | A4 | 21 December 2016 |
| | | | | EP | 2593494 | B1 | 14 March 2018 |
| | | | | JP | 2013-530300 | A | 25 July 2013 |
| | | | | JP | 5931061 | B2 | 08 June 2016 |
| | | | | KR | 10-1799132 | B1 | 17 November 2017 |
| | | | | KR | 10-2013-0041205 | A | 24 April 2013 |
| | | | | US | 2013-0115402 | A1 | 09 May 2013 |
| | | | | US | 9221971 | B2 | 29 December 2015 |

Form PCT/ISA/210 (patent family annex) (July 2022)